# NEW EUROPEAN PATENT SPECIFICATION

(11) **EP 0 335 735 B2**
(45) Date of publication and mention of the opposition decision: **08.11.2000**
(45) Mention of the grant of the patent: 16.06.1993
(21) Application number: 89303202.9
(22) Date of filing: 31.03.1989
(51) Int. Cl.: C04B 33/32, C04B 38/00, F27B 9/10, F27B 9/30

(54) **A process for firing ceramic shaped bodies and a tunnel kiln used therefor**
Verfahren zum Brennen von keramischen Formkörpern und Tunnelofen dafür
Procédé de cuisson de pièces façconnées en céramique et four tunnel pour cela

(30) Priority: 31.03.1988 JP 7644588
(43) Date of publication of application: 04.10.1989
(73) Proprietor: NGK INSULATORS, LTD., Nagoya City Aichi Pref. (JP)
(72) Inventor: Yasuda, Keiji, Niwa-Gun Aichi Pref. (JP); Ogura, Koji, Chiryu City Aichi Pref. (JP); Miyahara, Kazuhiro, Mizuho-Ku Nagoya City Aichi Pref. (JP)
(74) Representative: Paget, Hugh Charles Edward

(56) References cited:
- EP-A- 0 208 620
- WO-A-87/00611
- DE-A- 3 632 918
- DE-C- 3 517 866
- K. Junge, Verminderung der Schwelgasemission, Ziegeleitechnisches Jahrbuch 1986; Bauverlag Wiesbaden GmbH
- P. Assenmacher: Tunnelofenbrand, Ziegeleitechnisches Jahrbuch 1966; Bauverlag Wiesbaden GmbH
- Piltz-Härig-Schulz, Technologie der Baustoffe, 8. Auflage 1985
- P. Ernst, Dictionary of Engineering and Technology
- Prospekt "ADDITIVE-A CLAY CONDITIONERS" from the American Can Company

## Description

The present invention relates to a process for firing ceramic shaped bodies, particularly ceramic honeycomb structural bodies, and to a firing kiln adapted for effecting such a process.

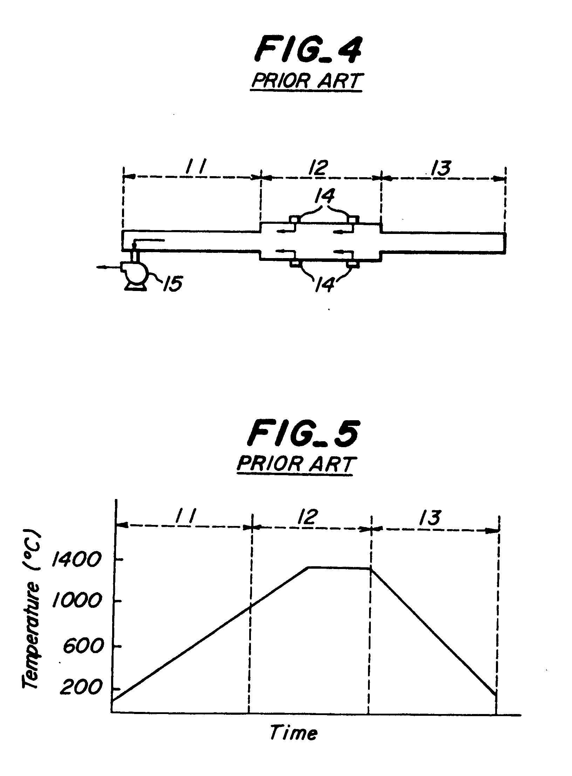

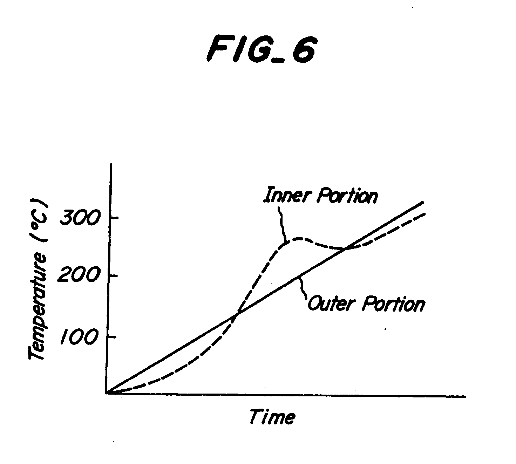

Heretofore, a tunnel kiln as shown in Fig. 4 has been used for firing ceramic honeycomb structural bodies with a view to mass production. The tunnel kiln is generally constituted by a preheating zone 11, a firing zone 12, and a waste heat zone 13. Combustion gases generated from combustion burners 14 provided at the firing zone 12 are evacuated outside the kiln through the preheating zone 11 by suction of an exhaust fan 15 provided at a low temperature section of the preheating zone 11 on the inlet side. In the tunnel kiln of this structure, as shown in Fig. 5, the firing condition is constituted by a temperature-rising section, a sintering section in which a constant temperature is maintained, and a temperature-descending section.

However, if ceramic shaped bodies are fired under such firing conditions, firing cracks or deformation occur in some of the fired products. In particular, occurrence of such defects is more frequent in the case of ceramic honeycomb structural bodies having a number of through holes.

It is an object of the present invention to solve the above-mentioned problems, and to provide a firing process which produces fired products free or more free from defects, as well as a tunnel kiln useful in the process.

The process according to the present invention is set out in claim 1.

The firing kiln according to the present invention is set out in claim 2.

In the process, since the heating rate up to the decomposing temperature of the shaping aid is slow, thermal decomposition of the shaping aid is made uniform so that neither firing cracks nor firing deformation occur.

Further, the ceramic-firing conditions of this process can be attained merely by providing the exhaust means at the high temperature section of the preheating zone on the outlet side.

These and other optional features and advantages of the invention will be appreciated upon reading of the following description of the invention when taken in conjunction with the attached drawings, with the understanding that some modifications, variations, and changes of the same could be made by the skilled person in the art to which the invention pertains.

For a better understanding of the invention, reference is made to the attached drawings, wherein:
Fig. 1 is a diagram showing a firing condition of an example of the ceramic-firing process according to the present invention;
Fig. 2 is a side view of a tunnel kiln given for comparison with the present invention;
Fig. 3 is a concept view illustrating the construction of an embodiment of the tunnel kiln of the present invention for effecting the firing process according to the present invention;
Fig. 4 is a concept view illustrating the construction of a tunnel kiln for effecting a conventional firing process;
Fig. 5 is a diagram illustrating an example of a heat curve of the tunnel kiln shown in Fig. 4; and
Fig. 6 is a diagram illustrating differences in temperature between an inner portion and an outer portion of a fired product obtained by the conventional process.

The ceramic-firing process and apparatus according to the present invention are based on knowledge obtained by examining conventional firing kilns and their firing conditions.

That is, the temperature distribution in the outer surface and the inside of the ceramic shaped body under the conventional firing conditions is that a shaping aid contained in the shaped body is thermally decomposed at 150 to 300°C, and owing to this, heat is first generated at the outer periphery of the ceramic shaped body, and then generated inside. Although heat generated at the outer periphery is easily dissipated, heat generated inside is accumulated without being dissipated. Therefore, it is found out that as shown in Fig. 6, a temperature difference occurs between the outer surface and the inside of the ceramic shaped body so that firing cracks are likely to occur. In particular, since extrusion shaping is employed for the ceramic honeycomb shaped bodies from the structural standpoint, a considerable amount of a shaping aid is contained. It is also found out that because partition walls defining through holes of the honeycomb are thin, firing cracks or thermal deformation is likely to occur due to slight change in temperature distribution.

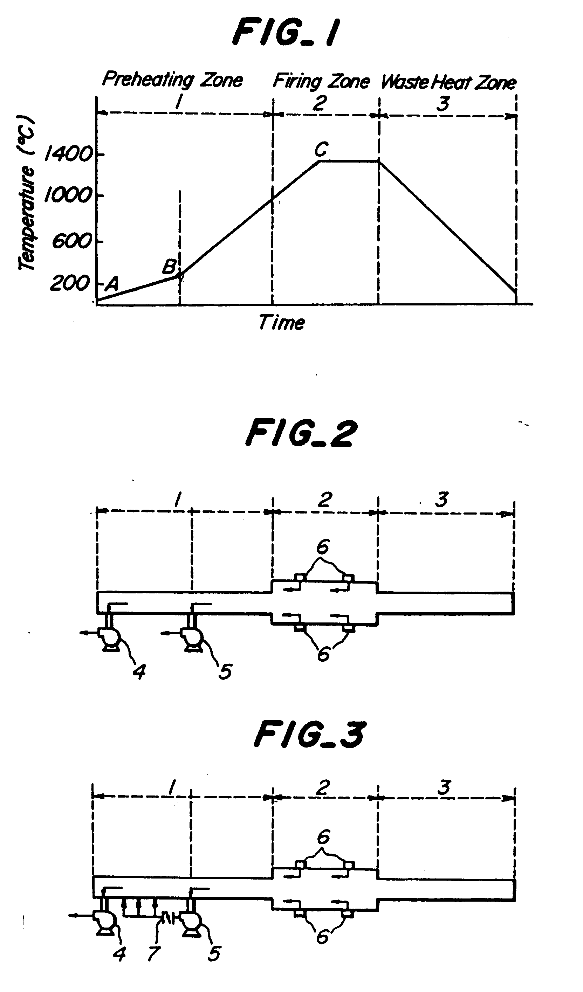

Therefore, as Fig. 1 shows for the relationship between the firing temperature and the time, according to the ceramic-firing process of the present invention, the heating rate in a temperature range from a firing-starting point A to a point B at which a shaping aid contained in a ceramic shaped body is thermally decomposed is smaller than in a temperature range from the point B to a sintering temperature C.

The shaping aid may involve binders such as methyl cellulose, carboxylmethyl cellulose, polyvinyl alcohol, starch paste, etc., a surface active agent, a lubricant such as wax, and the like. Therefore, the thermal decomposition temperature is specifically determined depending upon the kind of shaping aid, and therefore, the heating rate can be determined based on the dimension and shape of the shaped body and the content of the shaping aid.

For instance, when a body in which a shaping aid mainly composed of methyl cellulose is added to raw materials of talc, kaolin and alumina is extruded in the form of a honeycomb structure, a cordierite ceramic honeycomb structural body can be obtained by heating the shaped body such that the heating rate is set at 80 to 90°C/h in a range up to the decomposition temperature, 200°C, of methyl cellulose, and at 100 to 120°C/h in a range from 200°C to 1,400°C at which the shaped body is maintained during sintering.

The heating rate in the temperature range from the thermal decomposition temperature B to the sintering temperature C is set such that delay in raising the temperature from A to B is complemented.

Next, the firing kiln according to the present invention will be explained in more detail below with reference to the attached drawings.

Fig. 2 is a concept view illustrating the construction of a tunnel kiln given for comparison with the tunnel kiln of the present invention for effecting the firing process according to the present invention. The tunnel kiln is constituted by a preheating zone 1, a firing zone 2 and a waste heat zone 3. An exhaust fan 4 is provided at an inlet side of a low temperature section of the preheating zone 1 for evacuating combustion waste gas. Another exhaust fan 5 is provided at an outlet side of a high temperature section of the preheating zone 1 for evacuating the high temperature gas.

When the preheating zone 1 is constituted as above, the combustion gases generated by burners 6 positioned in the firing zone 2 are sucked by the exhaust fan 4 at the inlet side of the preheating zone 1 to generate the combustion gas stream, while the high temperature gas is sucked midway of this stream by means of the exhaust fan 5. Thereby, the firing condition as shown in Fig. 1 is attained for the tunnel kiln. By varying the exhaust amount of the high temperature gas through the exhaust fan 5, the heating rate can arbitrarily be varied. As a result, the heating rate of the shaping aid in the ceramic shaped body to be fired can be retarded near the decomposition temperature thereof so that temperature difference between the inside and the outer portion of the shaped body due to the decomposition of the shaping aid can be diminished.

Fig. 3 is a concept view illustrating a tunnel kiln according to the present invention also for effecting the firing process of the present invention. The same reference numerals in Fig. 2 are given to the same or similar parts in Fig.3 as in the tunnel kiln of Fig. 2, and explanation thereof is omitted. The embodiment in Fig. 3 differs from the kiln of Fig. 2 in that a high temperature gas at a high temperature section of a preheating zone 1 is evacuated by an exhaust fan 5, and supplied to a low temperature section of the preheating zone 1 through a temperature adjusting means 7.

When a large amount of the combustion gas is evacuated outside the kiln by means of the exhaust fan 5 to decrease the temperature-rising rate in the preheating zone as a temperature zone in which the shaping aid is decomposed, an amount of the gas circulated to the side of the exhaust fan 4 on the inlet side of the tunnel kiln decreases.

When the amount of the circulated gas decreases, the circulated gas tends to pass on the upper side of the kiln, that is, on a ceiling side of the kiln, because the temperature of the circulated gas is high. As a result, temperature difference occurs between the kiln bottom portion and the kiln upper portion, so that firing cracks or deformation occur in the fired shaped body due to such a temperature difference.

In order to prevent this phenomenon, the gas once discharged outside the kiln by the exhaust fan 5 is circulated to the low temperature section of the preheating zone, thereby removing the temperature difference between the upper portion and the bottom portion of the kiln.

The temperature of the combustion gas is controlled by a temperature adjuster 7 such as a heat exchanger or by changing the amount of the gas to be circulated. In Fig. 3, the temperature adjuster 7 is depicted to have a flow-controlling function, but a flow controller may be provided separately from the temperature adjuster.

In the above construction, the temperature of the preheating zone can be uniformalized, and heat inputs and outgoings can be improved by recycling the exhaust gas.

Although a single exhaust fan is provided in each of the low and high temperature sections of the preheating zone at the inlet side and the outlet side, respectively, in the above-mentioned embodiment, needless to say, the number of exhaust fans is not limited to one.

As is clear from the foregoing explanation, according to the firing process of the present invention, since the thermal decomposition of the shaping aid gradually proceeds, neither firing cracks nor deformation occur. Furthermore, in the tunnel kiln according to the present invention, the exhaust fan is provided at the high temperature section of the preheating zone at the outlet side for evacuating a given amount of the high temperature gas through the exhaust fan. Thereby, desired firing conditions can be attained during the firing. Consequently, since the temperature difference between the inner portion and the outer portion of the shaped body during the firing is removed, fired products free from cracks can be obtained.

## Claims

1. A process for firing ceramic shaped bodies in the form of honeycomb structural bodies made by extrusion and containing shaping aid which is thermally decomposed at 150 to 300°C, which process comprises the step of making the temperature increase rate in a temperature range up to the decomposing temperature of the shaping aid smaller than that in a temperature range from the decomposing temperature of the shaping aid to a firing temperature, to prevent cracking due to temperature difference within the body caused by the thermal decomposition of the shaping aid.

2. A tunnel kiln comprising a preheating zone (1), a firing zone (2), a waste heat zone (3), combustion burners (6) provided at the firing zone, an exhaust means (4) provided at an inlet side of the preheating zone for evacuating combustion gases from the combustion burners from the kiln wherein in operation combustion gases from the combustion burners at the firing zone pass along the whole length of the preheating zone (1) to the exhaust means (4) at the inlet side, the kiln further having another exhaust means (5) provided in a high temperature section of the preheating zone for evacuating combustion gases from the kiln, said other exhaust means (5) being connected to a portion of the preheating zone (1), upstream of said other exhaust means (5) with respect to the direction of movement of articles being fired in the kiln, for re-circulating at least part of the combustion gases evacuated through said other exhaust means.

3. The tunnel kiln according to claim 2, wherein said other exhaust means (5) is connected to the upstream portion of the preheating zone via a temperature adjuster (7).

## Patentansprüche

1. Verfahren zum Brennen von Keramikformkörpern in Form eines durch Extrudieren hergestellten Körpers mit Bienenwabenstruktur, der eine Formungshilfe enthält, die bei 150 bis 300 °C thermisch aufgelöst wird, welches den Schritt umfaßt, daß die Temperaturzunahmegeschwindigkeit in einem Temperaturbereich bis zu einer Auflösungstemperatur einer im Keramikformkörper enthaltenen Formungshilfe kleiner gemacht wird als in einem Temperaturbereich von der Auflösungstemperatur der Formungshilfe zu einer Brenntemperatur, um Rißbildung aufgrund von Temperaturdifferenz innerhalb des Körpers, die durch die thermische Auflösung der Formungshilfe erzeugt wird, zu verhindern.

2. Tunnelofen, der eine Vorwärmzone (1), eine Brenuzone (2), eine Abwärmezone (3), an der Brennzone vorgesehene Verbrennungsbrenner (6), ein Absaugmittel (4), das an einer Einlaßseite der Vorwärmzone vorgesehen ist, uni Verbrennungsgase aus den Verbrennungsbrennern aus dem Ofen abzusaugen, worin beim Betrieb Verbrennungsgase aus den Verbrennungsbrennern an der Brennzone die gesamte Länge der Vorwärmzone (1) entlang zum Absaugmittel (4) an der Einlaßseite gelangen, wobei der Ofen weiters ein weiteres Absaugmittel (5) umfaßt, das in einem Hochtemperatur-Abschnitt der Vorwärmezone vorgesehen ist, um Verbrennungsgase aus dem Ofen abzusaugen, wobei das andere Absaugmittel (5) an einen Teil der Vorwärmezone (1) stromauf vom anderen Absaugmittel (5) in bezug auf die Bewegungsrichtung von im Ofen gebrannt werdenden Gegenständen angeschlossen ist, um zumindest einen Teil der durch das andere Absaugmittel abgesaugten Verbrennungsgase zurückzuführen.

3. Tunnelofen nach Anspruch 2, worin das genannte andere Absaugmittel (5) über einen Temperatureinsteller (7) mit dem stromaufwärts gelegenen Teil der Vorwärmzone verbunden ist.

## Revendications

1. Procédé de cuisson de corps façonnés en céramique sous la forme de corps de structure alvéolée réalisés par extrusion et contenant une aide au formage qui est thermiquement décomposée à 150 jusqu'à 300°C, ce procédé comprenant l'étape consistant à diminuer la vitesse d'augmentation de température dans une plage de température jusqu'à une température de décomposition de l'aide au formage par rapport à celle dans une plage de températures allant de la température de décomposition de l'aide au formage à une température de cuisson, pour empêcher des craquelures dues à une différence des températures dans le corps provoquées par la décomposition thermique de l'aide au formage.

2. Four tunnel comprenant une zone de préchauffage (1), une zone de cuisson (2), une zone de chaleur perdue (3), des brûleurs de combustion (G) prévus à la zone de cuisson, un moyen d'échappement (4) prévu à un côté d'entrée de la zone de préchauffage pour évacuer des gaz de combustion des brûleurs de combustion du four où, en cours de fonctionnement, les gaz de combustion des brûleurs de combustion à la zone de cuisson passent sur toute la longueur de la zone de préchauffage (1) à un moyen d'échappement (4) au côté d'entrée, le four comportant en outre un autre moyen d'échappement (5) prévu dans une section de température élevée de la zone de préchauffage pour évacuer des gaz de combustion du four, ledit autre moyen d'échappement (5) étant relié à une portion de la zone de préchauffage (1), en amont dudit autre moyen d'échappement (5) par rapport à la direction de mouvement des articles cuits dans le four pour amener à re-circuler au moins une partie des gaz de combustion évacués à travers ledit autre moyen d'échappement.

3. Four tunnel selon la revendication 2, où ledit autre moyen d'échappement (5) est relié à la portion amont de la zone de préchauffage par un dispositif de réglage de température (7).
